# EUROPEAN PATENT APPLICATION

(11) **EP 2 591 682 A1**
(43) Date of publication of application: **15.05.2013**
(21) Application number: 11188936.6
(22) Date of filing: 14.11.2011
(51) Int. Cl.: A23B 4/06, A23B 4/10, A23B 4/22, A23B 4/26, A23B 7/155, A23B 7/16, A23L 1/00, A23L 3/3463, A23L 3/3589, A23L 3/36, C07K 14/415, F25D 17/04

(54) **Natural antimicrobial coating composition for perishable foods and domestic refrigerator using such composition**

(71) Applicant: Whirlpool Corporation, Benton Harbor, MI 49022 (US)
(72) Inventor: Tavolazzi, Stefano, 21025 Comerio (IT); Pirovano, Maria Paola, 21025 Comerio (IT)
(74) Representative: Guerci, Alessandro

(57) **Abstract**

A Coating composition, particularly for perishable food to be stored in a refrigerator compartment, comprises a solution of a prolamin protein selected in the group consisting of gliadin, hordein, secalin, zein or mixture thereof, and an antimicrobial substance, particularly lysozyme, niacin or niacinamide. The composition may be sprayed on the food placed in a refrigerator compartment.

## Description

The present invention relates to a coating composition, particularly for food that has to be stored in a refrigerator cavity, comprising a water/ethyl alcohol solution of a prolamine protein.

Fresh foods, in particular fruits, vegetables, meat and fish are classified as perishable food (Aw=0.95-1.00%) and so they are more susceptible to chemical and microbial alteration. These phenomena have negative impact on food quality in terms of safety, shelf life, appearance, colour, odour and texture.

The current solutions make use of MA (modified atmosphere), active packaging and passive packaging. This latter is an alternative technology made with biopolymers. The need to reduce the consumer of raw materials from fossil fuels has brought the development of polymers obtained from renewable raw materials. Basically it is an active film with antimicrobial properties.

There are also known solutions in which a protective coating are sprayed on foods, such coating being a solution of zein, a well known class of prolamine protein found in maize. DE 2242844 discloses a zein-based aerosol spray containing carbon dioxide propellant dissolvent in solvent for zein. JP 4079846 discloses a material forming a surface coating on fresh fruits containing zein, corn proteins, and aqueous solution of ethyl alcohol and fatty acids.

Even if such known coatings compositions are used for maintaining freshness of food, their antibacterial property are not sufficient for preventing growth of bacteria or the like.

An object of the invention is therefore to provide a coating composition to be applied on food stored in a refrigerator with increased antibacterial properties. Such object is obtained thanks to the features listed in the appended claims. The applicant has discovered that a protective coating onto the food surface based on an edible film of prolamine protein, particularly of a prolamine protein selected in the group consisting of gliadin, hordein, secalin, zein and mixture thereof, with an antimicrobial substance has surprising properties in terms of safe storage of perishable food. In a preferred embodiment of the invention the antimicrobial substance is selected in the group consisting of lysozyme, niacin, niacinamide or mixture thereof, and the prolamine protein is zein, which is a protein obtained from by maize manufacturing. Lysozyme is a well known enzyme having antimicrobial effects. The addition of small quantities of the above antimicrobial substance, particularly lysozyme to a water/alcohol solution of zein does increase the antibacterial properties of known zein solutions of a factor which is much higher if compared to the antibacterial properties of lysozyme or niacin or niacinamide alone. In other words, the combination on zein and antimicrobial substance in a sprayed coating shows a synergetic behaviour in terms of safe storage of coated food. Even if a water/ethanol solution is the preferred medium for solving zein and the antimicrobial substance, an alcohol, acetone and acetonilacetone can be used as well. The solution according to the invention can be used for all food categories, in particular for foods with high water activity (Aw) that are classified as perishable foods (fresh fruits and vegetables, fresh meat and fresh fish). The active film according to the invention presents the following properties: it is edible and biodegradable. The same film is food grade, environmental friendly and not toxic and so there is not problem for health. Another advantage of the coating composition according to the present invention is that it can be applied to food stored at temperatures closed to 0°C (for instance in a so called "zero degree compartment") with a further reduction of bacterial growth or in a pre-treatment before freezing of the food. In this latter case the beneficial effect of the coating composition is exploited when the food is thawed, due to the slow down of the kinetics bacteria growth if compared to a traditional thawing.

The edible film is preferably obtained by melting the zein in ethanol and water solution (about 60/40) and by adding an amount comprised between 0,5 and 6%, more preferably between 1% and 5%, more preferably around 3% by weight of the antibacterial substance, for instance lysozyme. The amount of zein in the solution is preferably comprised between 10% and 60%, more preferably between 15% and 55% and more preferably between 20% and 50% by weight, also in view of the solubility threshold around 65% of zein in the binary solvent water + ethanol. The benefits in terms of food preservation are pointed out by slowing down the growth of bacteria, the entry of oxygen and the discharge of water and carbon dioxide. In this way, the growth of bacteria and phenomena related to oxidation are slowed down and the shelf life of stored food is greatly extended. The active coating can be classified as consumable and can be produced with low energy consumption.

Another object of the present invention is to provide a way of spraying the active coating on the perishable food. This process can be implemented in a specific compartment or in the cavity of a domestic appliance, cabinet for supermarket or in a chamber for restaurant. Potential executions will be now explained in the detailed descriptions of several embodiments, with reference to the attached drawings in which:
- Figure 1 shows a schematic solution according to a first embodiment in which the active solution is sprayed from a pressurized cartridge containing nitrogen at low pressure;
- Figure 2 shows a second embodiment in which the active solution is diffused in the cavity by an ultrasonic membrane;
- Figure 3 shows a third embodiment in which the active solution is vaporized by means of an electric heater placed outside the refrigeration cavity;
- Figure 4 shows a fourth embodiment in which the active solution is placed in a tank above the cavity and can be delivered on food thanks to a grill with micro pores; and
- Figure 5 shows a fifth embodiment in which the cartridge with the active solution presents a flow connection with several nozzles placed on side walls of the cavity, at different levels thereof.

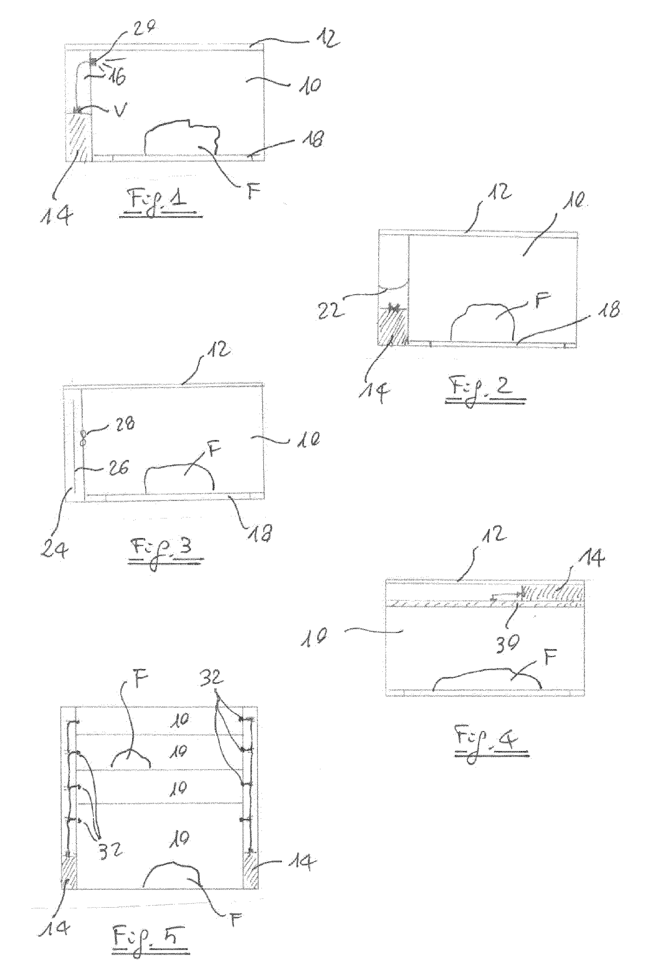

With reference to the drawings, and particularly to figure 1, the system is formed by a sealed compartment in the top part of the cavity of a refrigerator (fresh food compartment). The cavity 10 has a lid 12 that can be used as a shelf. A cartridge 14 with the active solution is placed in a small space 16 on a side of the cavity. In the bottom part of the cavity 10 there is a tray 18 to place food F. Active solution will be delivered by gas phase, through a nozzle 20 on food surface. An electro valve V is opened by electronic control with specific algorithm. Such algorithm is preferably designed so that the active solution is sprayed on food in function of relative humidity, temperature or door openings or a combination thereof. To assure the better antimicrobial action, the electro valve V will be opened for a specific time every time a sensor (not shown) senses a change in one of the above parameters with reference to a steady state within the cavity. The cartridge 14 with pressurized nitrogen and active solution is a consumable that user can buy and replace when needed according by an alarm on user interface (not shown). The cartridge 14 is activated when it is placed in its position. It is not necessary to put it inside the crisper. There is not direct contact between solution and consumer.

With reference to figure 2, where the same reference numerals are used for identical or similar components, a sealed compartment 10 has a lid 12 that can be used as a shelf and in the bottom part there is a tray 18 to place food F. The cartridge 14 with active solution is in vertical position, on the lateral side. The active solution is inside a cartridge that will diffuse in the crisper by means of an ultrasonic membrane 22. Such membrane 22 doesn't produce heat. When the cartridge 14 is empty, a warning light is switched ON on the user interface. The ultrasonic membrane 22 vibrates and nebulises the active solution. The cartridge 14 is smaller than the crisper and it is open at the top. The antimicrobial solution comes out every time the membrane is switched on.

With reference to figure 3 the active solution is placed in a specific cavity 24 with an electric heater 26. On the top of the crisper there is a lid 12. On the bottom of the crisper there is a tray 18 to place unwrapped food F. The process occurs thanks to a fan 28 positioned inside the crisper, between the plate delimiting the cavity 24 and the food F. The fan 28 is activated by an electronic control (not shown) and permits to diffuse the solution in the cavity 10. The fan 28 works for specific times and at predetermined intervals.

With reference to figure 4, a grill 30 with micro pores and a cartridge 14 with active solution is in the upper part of the crisper 10. An electric control in function of specific algorithm (based on relative humidity, temperature and door openings) opens the cartridge 14 at specific time for specific time intervals and the solution sets down in the cavity on fresh food F to form the edible protective film. On the bottom of the crisper 10 there is a tray 18 to place unwrapped food F. On the top of the crisper there is a lid 12 which can be used as a shelf to store other foods inside the refrigerator cavity.

With reference to figure 5, the cartridges 14 with the active solution are placed on lateral wall of sub-cavities 10. Each cartridge is connected to several nozzles 32 placed in different sub-cavities at different levels. In this embodiment a multiflow system on lateral sides of the refrigerator is provided, where the active solution may be sprayed only at certain levels depending on the type of food and/or on the control algorithm.

## Claims

1. Coating composition, particularly for perishable food to be stored in a refrigerator compartment, comprising a solution of a prolamin protein selected in the group consisting of gliadin, hordein, secalin, zein or mixture thereof, **characterised in that** the solution further comprises an antimicrobial substance.

2. Coating composition according to claim 1, wherein such antimicrobial substance is selected in the group consisting of lysozyme, niacin, niacinamide or mixture thereof.

3. Coating composition according to claim 1 or 2, wherein the content of said antimicrobial substance is comprised between 0,5% and 6% by weight.

4. Coating composition according to any of the preceding claims, wherein the prolamine protein is zein.

5. Coating composition according to claim 4, wherein the content of zein is comprised between 10% and 60% by weight.

6. Coating composition according to claim 2, wherein the content of niacin or its corresponding amide is comprised between 0,1 % and 3% by weight.

7. Refrigerator comprising a cavity (10) for food conservation **characterised in that** it comprises a device for delivering on food (F) a coating composition according to any of the preceding claims.

8. Refrigerator according to claim 7, wherein the device comprises a pressurized cartridge (14) or the like containing the solution, a control unit being provided for spraying such solution on food (F) when needed.

9. Refrigerator according to claim 7, wherein the device comprises an ultrasonic membrane (22) adapted to nebulise the solution in order to deliver to food (F) when a control unit detects that such delivery is needed.

10. Refrigerator according to claim 7, wherein the device comprises a tank (24) placed outside the cavity (10) and provided with an electric heater (26) and a fan (28) for diffusing the vapour of the solution generated in the tank (24) when a control unit activates the electric heater (26).

11. Refrigerator according to claim 7, wherein the device comprises a tank (14) placed in the upper portion of the cavity (10) and having a grill (30) with micro pores adapted to deliver the solution on food (F) when a control unit activates such micro pores.

12. Refrigerator according to claim 7, wherein the device comprises a cartridge (14) connected to a plurality of nozzles (32) for delivering the solution in a plurality of cavities (10) within the refrigerator.

13. Refrigerator according to any of claims 7-12, wherein the control system us adapted to detect any change in the steady state of the cavity, as relative humidity variation, temperature variation, door opening or a combination thereof.
